# EUROPEAN PATENT APPLICATION

(11) **EP 3 889 653 A1**
(43) Date of publication of application: **06.10.2021**
(21) Application number: 20166869.6
(22) Date of filing: 30.03.2020
(51) Int. Cl.: G01W 1/02, A01G 17/00, G01W 1/06

(54) **EQUIPMENT TO DETERMINE THE DEGREE OF RISK OF OCCURRENCE OF MILDEW IN PRODUCTIVE ROWS**

(71) Applicant: Universidade de Trás-os-Montes e Alto Douro, 5001-801 Quinta de Prados (PT)
(72) Inventor: PEREIRA MORAIS DOS SANTOS, RAUL MANUEL, 5000-439 VILA REAL (PT); MENDES GUERRA MARQUES CORTEZ, MARIA ISABEL, 3465-104 CAPARROSA (PT); SOARES PERES CORREIA, EMANUEL, 5050-105 GODIM, PESO DA RÉGUA (PT); MOREIRA DE SOUSA, JOAQUIM JOÃO, 4620-391 MEINEDO LOUSADA (PT); FERREIRA DA SILVA MENDES, JORGE MIGUEL, 4620-060 LOUSADA (PT); NEVES DOS SANTOS, FILIPE BAPTISTA, 4505-555 LOBÃO (PT)
(74) Representative: Ferreira, Maria Silvina

(57) **Abstract**

The present application refers to an equipment to determine the degree of risk of occurrence of mildew in plants or productive rows, having as a base a set of sensors and an algorithm executed in the processing unit of the device itself. The result of the calculation is, subsequently, used to create specific warnings regarding the place of installation of the equipment which, optionally may use other relevant and available information through an internet connection, about the conditions for cultivation and/or climatic to increase the level of trust in the forecast made. Apart from the determination of the degree of risk of occurrence of primary infection from mildew, the present invention also foresees the occurrence of the second infection and may further suggest the type of fungicide to be applied. The system is completely autonomous and may be used together with an application for mobile devices that facilitate its installation and placing in working conditions.

## Description

### Technical field

The present application is inserted in the domain of technology and intelligent monitoring and is related to an equipment and a process for determining the degree of risk of the occurrence of mildew in productive rows.

### Background

The vine mildew is a disease originating from the American continent, and which entered Europe, through the French territory, in the year 1878. This disease quickly spread to all the wine producing regions of Europe, being currently one of the major enemies of this culture. The disease is caused by the fungus *Plasmospara vitícola,* an endoparasite that develops in the interior of the vegetable organs of the grapevine, that can infect practically all the green organs of the plant, particularly the shoots, leaves, inflorescences, tendrils and even the petioles. This is a disease that can cause significant losses for the winegrowers and lead, in extreme situations, to total loss of production.

The determination of the degree of risk of appearance of diseases such as mildew in grapevine is, currently, carried out by government agencies for agricultural warnings, based on meteorological stations and in forecast models. The variability of the monitored regions and the dispersion of the meteorological stations throughout the territories results in the forecasts being, many times, inaccurate and the degree of risk determined, unprecise.

The presented system permits to innovate this process since the degree of risk will be determined with maximum precision for a specific location, using data collected by a device placed in this same location instead of using data from a meteorological station that may be situated dozens of kilometers away.

The importance of the application of fungicides for combatting this and other diseases at the right moment, which may be achieved by the fact that the farmer receives an agricultural warning at the right time, may lead to savings in the order of several million euros by avoiding the excessive application of phytopharmaceuticals, since diseases such as vine mildew reduce significantly the production. In this manner, the early detection thereof is essential for a smaller and more assertive use of fungicides. In spite of the efforts of the government agencies, it is not possible to assess the favorable conditions for the development of mildew in real time and with a wide spatial coverage, whereby this assessment is made even more difficult due to the spatial and temporal variability of the conditions for development of the several rows that may be attacked by this disease.

Although there exist other methods (apart from those previously presented) that permit determining the degree of risk of occurrence of mildew, none of them is structed in the form of an autonomous and self-sufficient equipment. The methods of detection and/or assessment are usually based on genetic tests and the forecast methods resort to empiric rules for this determination. In the empiric rules used by the forecast models, the monitoring of the condensation of water vapor in the leaves (by using a sensor of wet leaves), the precipitation and the air temperature are the variables mostly used.

One of the best-known empiric rules is called the "Rule 3-10" [1] and permits effecting an estimate of the risk of occurrence of a primary mildew infection taking into consideration three conditions, namely, there exists risk of the disease occurring if these three conditions are simultaneously verified:
- Length of shoots of plants is superior to 10 centimeters;
- Average temperature in the last 48 hours is higher than 10 degrees Celsius;
- Precipitation accumulation is higher than 10 mm during the last 48 hours.

The use of the images captured by a video camera that comprises the device presented in the present application, emerges as an equipment for effecting the measuring of the length of the shoots in the vines, one of the 3 conditions that must be verified to determine whether there exists risk of probability of occurrence of mildew or not. This rule has been applied manually, which demands that the winegrowers physically move to the vines to examine the stage of development of the shoots. The method here presented renders this task unnecessary and, further, the winegrower does not need to visualize and analyze the images, since a machine learning algorithm is responsible for the analysis of same, so as to determine whether there exist shoots larger than 10 centimeters.

Once verified the conditions for the occurrence of a primary mildew infection, the calculation of the development of the fungus is initiated using the model created, in 1959, by Gabriel Goidanich [2]. This model takes into consideration three parameters:
- Average relative humidity of the air;
- Average temperature;
- Accumulation of daily precipitation.

The average relative humidity of the air and the average temperature permit determining the daily percentage of development of the fungus, while the accumulation of the daily precipitation permits verifying which type of fungicide is more adequate to be applied, which may be of contact, penetration or systemic. As soon as the accumulated sum of the daily percentages of development of the fungus exceeds 70%, the risk of harm to the vine is high and for this reason it is necessary to intervene quickly. When the fungicide is applied, the percentage of development of the fungus is reinitiated and suspended during a period of days determined in accordance with the type of fungicide applied and its active substance or until the product applied has been leached by rain.

Subsequently to the primary infection, there still exists the possibility of the occurrence of a secondary infection. For this, it is necessary that there occurs sporulation, an event that is verified when the following conditions are true:
- Relative humidity of the air higher than 92%;
- Air temperature equal to or higher than 11 degrees Celsius;
- Absence of light during at least 4 hours.

In this manner, once the primary infection and the sporulation have occurred, it is verified the existence of the possibility of the occurrence of the secondary infection.

To the knowledge of the applicants, there are no similar prior techniques that permit determining the degree of the risk of occurrence of mildew in vines or in productive rows. However, there are some documents that present systems that permit effecting the measuring/monitoring of environment and soil parameters in vines. However, these systems solely permit gathering data and do not provide, in an automated and autonomous manner, any information that helps the winegrowers in making decisions such as, for example, on the application of fungicides.

In document US7382269B2 a device is presented that permits monitoring environmental conditions that are favorable to the growth of mold and fungi in the interior of buildings. This apparatus consists of a microprocessor to which are connected a temperature sensor, a relative humidity sensor, an indicator of environmental conditions. This indicator may consist of a sole LED, a LED matrix, an audio speaker or a display where a message is exhibited. The scope of this invention is different from that presented herein, since this device was developed to be used in the interior of buildings and the indicator of environmental conditions presumes that the user is physically near the device, not being able to verify conditions at a distance. Further, it is based solely on the relation between the temperature and humidity measures at a given moment and the indication of conditions is made based on a static table of values stored in the microprocessor.

In document CN202735831U it is presented a utility model of a monitoring system for vines based on a set of sensors (temperature, humidity of the air and soil), devices for acquisition of data, wireless modem communicators and a gateway where a monitoring terminal is connected. Each sensor is connected to a data acquisition unit that communicates with the gateway and which, in turn, sends the data to the monitoring terminal. This invention refers to a wireless sensor web that permits collecting data gathered from several devices and storing them in one sole location where they may be visualized by the user. This utility model does not present any system for forecast/warning of the occurrence of any event.

In document WO2014100502A1 there are presented a system and a method for data acquisition and visualization of plants that permits the visual micromanagement of a culture. It permits visualizing old and current images of a plant so as to monitor the growth thereof. The images of an individual plant and the maintenance instructions are exhibited automatically and in real time when the worker is in proximity to the plant. This can be done through bar codes, radio frequency identification tags (RFID) or other techniques exclusive for plant identification. According to the data collected, the system selects them and automatically exhibits relevant information over a specific fruit or plant. It is in fact, a system that permits monitoring the evolution of the plants and helps in the culture management, not being carried out any type of processing about the images collected nor being presented any system for forecast/warning of the occurrence of any event.

The documents referred to previously do not present inventions developed for the same scope (determination of the degree of occurrence of mildew in plants or productive rows), they do not present technical characteristics included in the present claims and do not have the same objectives as the present invention.

This technology distinguishes itself from these systems due to the fact that it permits obtaining useful information for the winegrowers, directly from the data collected and in an automatic manner, helping in the decision-making. Further, there are no, up to the moment, devices of this kind that use cameras with the purpose of determining the degree of risk of the appearance of diseases such as vine mildew.

### Summary

The present application refers to an equipment for determining the degree of risk of occurrence of mildew in productive rows comprising:
at least one video camera (102),
a rain gauge (103),
a wet leaf sensor (104),
a temperature and relative air humidity sensor (105), and
a local processing device (106), that collects information from the video camera (102), the rain gauge (103), the wet leaf sensor (104) and the temperature and relative air humidity sensor (105) and that, through the processing of the gathered information, determines the degree of risk of the appearance of vine mildew according to the 3-10 Rule; and
wherein, the degree of risk is calculated when the shoots present more than 10 centimeters in length measured by camera (102), when the average air temperature is higher than 10 degrees Celsius and when there occurred a precipitation superior to 10 mm during the 48 preceding hours to having reached the average temperature of 10 degrees Celsius.

In one embodiment, the device for local processing (106) comprises additionally a data communication system that communicates with the mobile device of the user (108) through a wireless connection (107).

In another embodiment, the device for local processing (106) accesses remotely, through an internet connection (109), the forecasts for global diseases for effecting the calculation of the risk of occurrence of mildew.

The present application also refers to a process for determining the degree of risk of the occurrence of mildew in productive rows by means of the previously described equipment, and executed by the data processing unit (106), comprising the following steps:
- As soon as the process is initiated (201), it is verified whether the first mildew infection has previously occurred (202) ;
- In case it has not occurred yet, the 3-10 Rule (204) is applied on the data collected by the device during the last 48 hours;
- After applying this rule, in case there are no conditions for the first infection (205), the process ends (216);
- In case the conditions are favorable to the occurrence of this first infection (206), a warning is sent to the user (207) and in continuity, the percentage of development of the fungus is calculated (208);
- This percentage is added to a previous percentage (209) if there exists one (210);
- Subsequently, it is verified whether the percentage of development of the accumulated fungus is higher than 70% (211) and, in the affirmative, a warning is once again sent out to the user notifying of this situation (212);
- The conditions for the occurrence of the second infection (213) are verified;
- In case these conditions indicate that there exists risk of the occurrence of infection (214), a last warning is sent to the user (215) and the process ends (216).

In one embodiment if the first mildew infection has already occurred (203) then the beginning (201) of the process passes automatically to the calculation of the percentage of development of the fungus (208) and the remaining process is executed in accordance with the prior situation and until this is concluded (216).

### General description

The equipment described in this patent application is adequate to the continuous monitoring and determination of the degree of risk of the appearance of vine mildew in productive rows, but not limited to either this disease or to this row, in real time and taking into account the climatic conditions and those of the development of the plant being monitored. The equipment is easily installed and autonomous/self-sufficient in terms of energy and necessary data for determining the degree of risk. However, and since this device has a communication module, it can, optionally, use other relevant information available through an internet connection, on the cultivation and/or climate conditions in the region to increase the degree of trust in the forecast made. In terms of physical structure, the device is comprised of a computer processing unit of reduced dimensions to which are connected a rain gauge, a wet leaf sensor, an air temperature sensor, a relative air humidity sensor and a video camera that, together, permit assessing automatically the degree of development of the culture being monitored.

In the equipment herein described, to which are connected the also referred sensors, a computer program is executed that, based on the data provided by the sensors, determines the degree of risk by means of application of the 3-10 Rule, that is, whenever the shoots have more than 10 centimeters length, measured through an image obtained by the camera of the device, the precipitation during the last 48 hours has been higher than 10 mm and the average temperature has been higher than 10 degrees Celsius, then we are facing conditions that propitiate the development of the mildew.

Once verified the conditions for the occurrence of a primary mildew infection, a calculation of the development of the fungus is carried out taking into consideration the average relative air humidity, the average temperature and the accumulated daily precipitation. The average relative air humidity and the average temperature permit determining the daily percentage of the development of the fungus, while the accumulation of the daily precipitation permits verifying which is the most suitable type of fungicide to be applied, which are contact, penetration or systemic. As soon as the sum of the accumulated daily percentage of development of the fungus exceeds the 70%, the risk of harm to the vine is high which is why it is necessary to intervene as soon as possible. When the fungicide application is carried out, the percentage of development of the fungus is reinitiated and suspended during a period of days determined in accordance with the type of fungicide applied and its active substance or until the product applied is leached by rain.

After the primary infection there still exists the possibility of the occurrence of a secondary infection, where, for this to occur, it is necessary that sporulation takes place, an event that is verified when the relative air humidity is higher than 92%, the air temperature is equal to or higher than 11 degrees Celsius and there exists absence of light during at least 4 hours. Once the primary infection and the sporulation have occurred, the possibility of the occurrence of the secondary infection exists.

The computer program, based on the appliance of these rules, or of others that may be better suited to the row in question or for determining other diseases, determines a value corresponding to a degree of risk that, whenever it is verified that it is higher than a certain limit value, the device will send a warning to the user by several means, such as through mobile phone messages, by e-mail or by means of an online platform where the data (numerical and images) that are being collected by the device are visualized.

The innovation resides in the fact that the equipment is a self-contained solution in terms of sensors and resident computer program in the local processing unit.

With the purpose of improving the precision of the degree of risk calculated, which is, as previously seen, a function of the data acquired by local sensors, including images, the equipment described is supplemented with a web interface (communication module), which permits sending data to a remote platform, known as server, for visualization, registration and storage. By means of this interface, the equipment may also be configured through a mobile device that will help the user to install it correctly, that is, place the camera of the equipment pointing to the plant being monitored. It is also through this web interface that the rules used for the calculation of the degree of risk can be adjusted, that is, it permits altering remotely the rule or simply adjusting its parameters.

The results that may arise from this technology are manifested through the transmission of warnings for the use of phytopharmaceuticals solely when strictly necessary and in accordance with the specific location where the equipment is installed. The equipment may be multiplied over the terrain and thus obtain a thin mesh for detection of the most propitious conditions for the appearance of the monitored disease. The profits resulting from the use of this technology are guaranteed by the reduction in the application of the same phytopharmaceuticals, reducing the costs of the product and the application, by the intervention following early detection and reduction of production losses.

### Brief description of figures

For an easy understanding of the present application figures are attached which represent preferred embodiments that, however, do not intend to limit the technology herein disclosed.
Figure 1 illustrates one embodiment of the equipment of the present application where there are presented all the components that comprise it and where the numerical references indicate:
   1) Plant being monitored for the occurrence of disease;
   2) Video camera;
   3) Rain gauge;
   4) Humid leaf sensor;
   5) Temperature and relative air humidity sensor;
   6) Removable device for data processing;
   7) Wireless data connection;
   8) User's mobile device.
Figure 2 illustrates a diagram of computer program blocks that is executed in the processing unit of the equipment of the present application and that permits obtaining the degree of risk of occurrence of mildew.

### Description of preferred embodiments

Referring to the figures, some embodiments are now described in a more detailed manner which do not intend, however, to limit the scope of the present application.

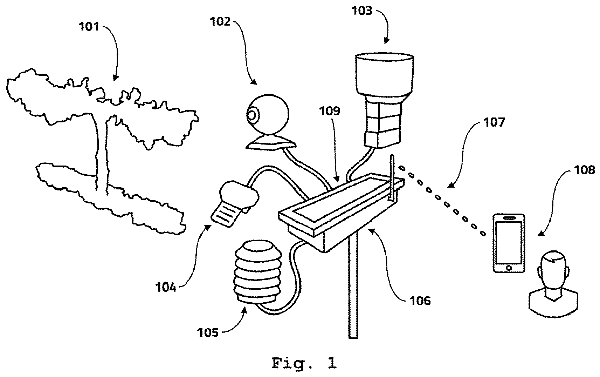

Figure 1 illustrates the components of the equipment (102, 103, 104, 105 and 106) for determining the risk of occurrence of mildew, which must be placed by the plant under monitorization (101), which may be representative of a micro zone.

In one embodiment, the equipment comprises other auxiliary sensors for measuring specific parameters of the disease such as, for example, wind speed and direction, humidity and temperature of the soil, sap flow and solar radiation sensors.

The placing of the equipment comprised of video camera (102), rain gauge (103), humid leaf sensor (104) and temperature and relative air humidity sensor (105) is made by the user with the aid of his mobile communication device (108) resorting to wireless data connection (107). By means of the images obtained by the video camera (102), which may be visualized through the mobile communications device, the user may correctly adjust the position of the equipment until the plant is duly framed in the image obtained. This procedure permits that the equipment completely monitor the plant and can correctly detect the appearance of shoots and, in this manner, by means of digital image processing, calculate their size. The rain gauge (103), permits measuring the precipitation that occurred. The humid leaf sensor (104) is destined to assess the conditions of water condensation on the leaf. The combined temperature and relative air humidity sensor (105) permits measuring the temperature and relative air humidity of the plant being monitored.

Specifically for the mildew disease, the local processing device (106) uses the information obtained by the video camera (102) and by the sensors (103), (104) and (105) to determine the degree of risk of the appearance of vine mildew according to the 3-10 Rule, that is, when the shoots are more than 10 centimeters in length (measured through the image obtained by the camera), when the average environment temperature is higher than 10 degrees Celsius and there has been a precipitation higher than 10 mm during the 48 preceding hours to having reached the average temperature of 10 degrees Celsius.

These conditions are calculated solely after the vine enters the new vegetative cycle, which beginning is determined by processing the images from the video camera (102) that permit verifying the appearance of new shoots. The amount of the relative air humidity provided by the combined sensor (105) permits assessing the relative air humidity conditions and presence of condensed water vapor, conditions for proliferation of the disease.

The local processing device (106) communicates with the mobile device of the user (108) by means of a wireless connection so as to facilitate the process of installation and the configuration of the equipment. It can, if these are available, use risk forecasts of global diseases, remotely available through an internet connection (109), and use them to adjust the degree of local risk, that is, the degree of risk of the vine being monitored.

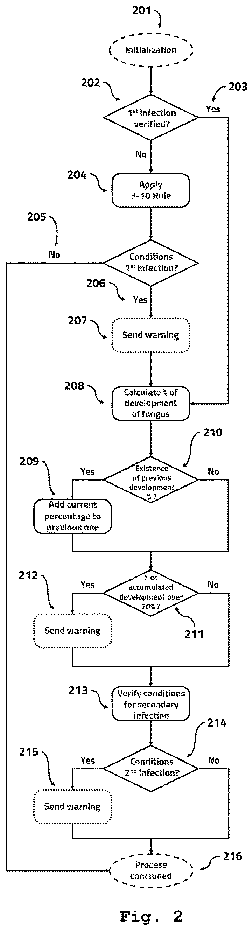

Figure 2 represents a block diagram of the software that is executed in the data processing unit (106) of the device presented in Figure 1. This is the software responsible for obtaining the degree of risk of the occurrence of mildew. As soon as the process is initiated (201), it is verified if the first infection by mildew has occurred previously (202). In case it has not occurred yet, the 3-10 Rule (204) is applied over the data collected by the device during the last 48 hours. After the first application of this rule, in case there are no conditions for the first infection (205) the process ends (216). In case the conditions are favorable to the occurrence of this first infection (206), a warning is sent to the user (207) and in continuity the percentage of development of the fungus (208) is calculated. This percentage is added to a previous percentage (209), in case it exists (210). Subsequently it is verified whether the percentage of development of the accumulated fungi is higher than 70% (211) and, in the affirmative, a warning is sent once again to the user to notify this situation (212). Finally, the conditions for the occurrence of the second infection (213) are verified. In case these conditions indicate that there exists risk of occurrence of infection (214), a last warning is sent to the user (215) and the process is concluded (216). There still exists, in the beginning of the process, another situation where the first mildew infection might already have occurred (203) and, in this case, the process of application of the 3-10 Rule is not carried out and it passes automatically to the calculation of the percentage of development of the fungus (208) and the remaining process is executed as per the previous situation and until this is concluded (216).

### Bibliography

[1] Baldacci, E. (1947). Epifitie di Plasmopara viticola (1941-46) nell'Oltrepo Pavese ed adozione del calendario di incubazione come strumento di lotta. Atti Istituto Botanico, Laboratorio Crittogamico, 8, 45-85
[2] Goidanich, G. (1964). Manuale di patologia vegetale. Edizione Agricole

## Claims

1. Equipment for determining the degree of risk of occurrence of mildew in productive vines **characterized by** comprising:
at least one video camera (102),
a rain gauge (103),
a humid leaf sensor (104),
a temperature and relative air humidity sensor (105), and
a local processing device (106), that collects information from the video camera (102) the rain gauge (103), the humid leaf sensor (104) and from the temperature and relative air humidity sensor (105), and that, by means of processing the gathered information, determines the degree of risk of appearance of vine mildew according to the 3-10 Rule; and
wherein, the degree of risk is calculated when the shoots present more than 10 centimeters in length measured by the camera (102), when the average environment temperature is higher than 10 degrees Celsius and when there has occurred a precipitation higher than 10 mm during the 48 hours prior to having reached the average temperature of 10 degrees Celsius.

2. Equipment according to the previous claim, **characterized by** the local processing unit (106) comprising additionally a data communications system that communicates with the mobile device of the user (108) through a wireless connection (107).

3. Equipment according to any of the preceding claims, **characterized by** the local processing device (106) accessing remotely, through an internet connection (109), the forecasts for global diseases for effecting the calculation of the risks of the occurrence of mildew.

4. Process for determining the degree of risk of the occurrence of diseases in productive rows by means of the equipment described in claims 1 to 3, and executed by the data processing unit (106), **characterized by** comprising the following steps:
- As soon as the process is initiated (201), it is verified whether the first mildew infection has previously occurred (202) ;
- In case it has not occurred yet, the 3-10 Rule (204) is applied on the data collected by the device during the last 48 hours;
- After applying this rule, in case there are no conditions for the first infection (205), the process ends (216);
- In case the conditions are favorable to the occurrence of this first infection (206), a warning is sent to the user (207) and in continuity the percentage of development of the fungus is calculated (208);
- This percentage is added to a previous percentage (209) if there exists one (210);
- Subsequently it is verified whether the percentage of development of the accumulated fungus is higher than 70% (211) and, in the affirmative, a warning is once again sent out to the user notifying of this situation (212);
- The conditions for the occurrence of the second infection (213) are verified;
- In case these conditions indicate that there exists risk of the occurrence of infection (214), a last warning is sent to the user (215) and the process ends (216).

5. Process according to the previous claim, **characterized by** the fact that, if the first mildew infection has already occurred (203), then the beginning (201) of the process passes automatically to the calculation of the percentage of the development of the fungus (208) and the remaining process is executed according to the previous situation and until this is concluded (216).

## Amended claims

### Amended claims in accordance with Rule 137(2) EPC.

1. Equipment for determining the degree of risk of occurrence of mildew in productive vines **characterized by** comprising:
at least one video camera (102),
a rain gauge (103),
a humid leaf sensor (104),
a temperature and relative air humidity sensor (105), and
a local processing device (106), configured to collect information from the video camera (102), the rain gauge (103), the humid leaf sensor (104) and from the temperature and relative air humidity sensor (105), and that, by means of processing the gathered information, and is adapted to determine the degree of risk of appearance of vine mildew according to the 3-10 Rule; and
wherein, the local processing device (106) is configured to calculate the degree of risk when the shoots present more than 10 centimeters in length measured by the camera (102), when the average environment temperature is higher than 10 degrees Celsius and when there has occurred a precipitation higher than 10 mm during the 48 hours prior to having reached the average temperature of 10 degrees Celsius.

2. Equipment according to the previous claim, **characterized by** the local processing unit (106) comprising additionally a data communications system configured to communicate with a mobile device of a user (108) through a wireless connection (107).

3. Equipment according to any of the preceding claims, **characterized by** the local processing device (106) accessing remotely, through an internet connection (109),forecasts for global diseases for effecting the calculation of the risks of the occurrence of mildew.

4. Process for determining the degree of risk of the occurrence of diseases in productive rows by means of the equipment described in claims 1 to 3, and executed by the data processing unit (106), **characterized by** comprising the following steps:
- As soon as the process is initiated (201), it is verified whether a first mildew infection has previously occurred (202) ;
- In case it has not occurred yet, the 3-10 Rule (204) is applied on the data collected by the device during the last 48 hours;
- After applying this rule, in case there are no conditions for the first infection (205), the process ends (216);
- In case the conditions are favorable to the occurrence of this first infection (206), a warning is sent to the user (207) and in continuity the percentage of development of a mildew fungus is calculated (208);
- This percentage is added to a previous percentage (209) if there exists one (210);
- Subsequently it is verified whether the percentage of development of the accumulated fungus is higher than 70% (211) and, in the affirmative, a warning is once again sent out to the user notifying of this situation (212);
- The conditions for the occurrence of the second infection (213) are verified;
- In case these conditions indicate that there exists risk of the occurrence of infection (214), a last warning is sent to the user (215) and the process ends (216).

5. Process according to the previous claim, **characterized by** the fact that, if the first mildew infection has already occurred (203), then the beginning (201) of the process passes automatically to the calculation of the percentage of the development of the fungus (208) and the remaining process is executed according to the previous situation and until this is concluded (216).
